# EUROPÄISCHE PATENTSCHRIFT

(11) **EP 2 697 103 B1**
(45) Veröffentlichungstag und Bekanntmachung des Hinweises auf die Patenterteilung: **06.05.2020**
(21) Anmeldenummer: 12708025.7
(22) Anmeldetag: 09.03.2012
(51) Int. Cl.: B60S 1/38

(54) **WISCHBLATTADAPTERVORRICHTUNG**
WIPERBLADE ADAPTER SYSTEM
SYSTEME D'ADAPTATEUR DE BALAI D'ESSUIE GLACE

(30) Priorität: 13.04.2011 DE 102011007247
(43) Veröffentlichungstag der Anmeldung: 19.02.2014
(73) Patentinhaber: Robert Bosch GmbH, 70442 Stuttgart (DE)
(72) Erfinder: BENNER, Andreas, Taipei 104 (TW); LICHTENTHALER, Eckhard, 76228 Karlsruhe-Hohenwettersbach (DE); OBERT, Mike, 76593 Gernsbach (DE)
(86) Internationale Anmeldenummer: PCT/EP2012/054104
(87) Internationale Veröffentlichungsnummer: WO 2012/139824

(56) Entgegenhaltungen:
- EP-A2- 0 141 186
- DE-A1-102009 000 762
- DE-A1-102009 002 764

## Beschreibung

### Stand der Technik

Es sind bereits Wischblattadaptervorrichtungen mit einem Wischarmadapter und einem Wischblattadapter bekannt.

Verschiedene Wischblattadaptervorrichtungen sind aus der DE 10 2009 000 762 A1, sowie aus der 10 2009 002 764 A1 und der EP 01 41 186 A2 bekannt.

### Offenbarung der Erfindung

Die Erfindung geht aus von einer Wischblattadaptervorrichtung mit einem Wischarmadapter und einem Wischblattadapter.

Es wird vorgeschlagen, dass die Wischblattadaptervorrichtung eine Drehlagereinheit aufweist, die dazu vorgesehen ist, den Wischarmadapter und den Wischblattadapter bei einem Montagevorgang relativ zueinander um eine Längsachse des Wischblattadapters drehbar zu lagern. Dadurch kann für einen Benutzer ein schneller und intuitiver Montagevorgang erreicht werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischerarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einer "Längsachse des Wischblattadapters" soll in diesem Zusammenhang insbesondere eine Achse verstanden werden, die parallel zu einer Auflagefläche des Wischblattadapters und im Wesentlichen parallel zu einer Hauptlängserstreckung des Wischblattadapters angeordnet ist. Unter einer "Auflagefläche" soll in diesem Zusammenhang insbesondere eine ebene Fläche verstanden werden, auf die der Wischarmadapter bei einem Montagevorgang aufsetzt und/oder die dazu vorgesehen ist, eine Hauptanpresskraft des Wischarmadapters auf den Wischblattadapter zu übertragen. Unter einer "Hauptanpresskraft" soll in diesem Zusammenhang insbesondere eine Kraft verstanden werden, die den Wischblattadapter und/oder ein Wischblatt in Richtung einer zu wischenden Oberfläche, wie insbesondere einer Kraftfahrzeugscheibe, drückt. Unter einer "Hauptlängserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter "im Wesentlichen" soll in diesem Zusammenhang insbesondere eine Abweichung von weniger als 20° verstanden werden. Bevorzugt verläuft die Längsachse parallel zu Seitenwänden des Wischblattadapters. Unter "vorgesehen" soll insbesondere speziell ausgelegt und/oder ausgestattet verstanden werden.

In der Erfindung wird vorgeschlagen, dass die Wischblattadaptervorrichtung eine Rasteinheit aufweist, die dazu vorgesehen ist, in einem montierten Zustand eine Rastverbindung zwischen dem Wischarmadapter und dem Wischblattadapter zu bilden, wodurch eine besonders einfache Sicherung der Wischblattadaptervorrichtung in einem montierten Zustand erreicht werden kann. Unter einer "Rasteinheit" soll dabei insbesondere eine Einheit mit wenigstens einem Rastelement verstanden werden, das bei einem Montagevorgang elastisch ausgelenkt wird, um anschließend durch eine innere Spannkraft in eine korrespondierende Rastausnehmung einzurasten.
Ferner wird vorgeschlagen, dass die Rasteinheit zumindest ein Rastmittel aufweist, das am Wischarmadapter angeordnet ist. Dadurch kann eine besonders sichere Rastverbindung hergestellt werden und/oder das zumindest eine Rastmittel für einen Bediener gut erreichbar ausgestaltet werden und/oder eine Bedienung des zumindest einen Rastmittels, beispielsweise für eine Demontage, besonders einfach erfolgen. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden.

Das Rastmittel der Erfindung ist dazu vorgesehen, bei einem Montagevorgang um die Längsachse ausgelenkt zu werden. Dadurch kann das Rastmittel eine Belastung über eine besonders große Fläche verteilen, was zu einer geringen Belastung und/oder hohen Haltbarkeit der Wischblattadaptervorrichtung führen kann.

In der Erfindung weist die Rasteinheit zumindest eine Rastausnehmung auf, die am Wischblattadapter angeordnet ist. Dadurch kann die Rasteinheit besonders platzsparend ausgeformt werden. Unter einer "Rastausnehmung" soll in diesem Zusammenhang insbesondere eine Ausnehmung verstanden werden, die mit einem Rastmittel korrespondiert und/oder dazu vorgesehen ist, das Rastmittel in einem montierten Zustand aufzunehmen.

In der Erfindung wird eine Rastausnehmung zumindest teilweise in einer Seitenwandung und zumindest teilweise innerhalb eines Grundkörpers des Wischblattadapters angeordnet. Unter einer "Seitenwandung" soll in diesem Zusammenhang insbesondere eine Wandung verstanden werden, die dazu vorgesehen ist, in einem montierten Zustand einen Anschlag für den Wischarmadapter in eine Richtung bereitzustellen, die parallel zur Auflagefläche des Wischblattadapters verläuft. Bevorzugt nimmt die Seitenwandung ausschließlich Kräfte zwischen Wischarmadapter und Wischblattadapter auf, die parallel zur Auflagefläche des Wischblattadapters verlaufen. Unter einem "Grundkörper des Wischblattadapters" soll in diesem Zusammenhang insbesondere ein Körper verstanden werden, der dazu vorgesehen ist, Kräfte zwischen Wischarmadapter und Wischblattadapter aufzunehmen, die senkrecht zur Auflagefläche des Wischblattadapters wirken.

In einer weiteren Ausgestaltung der Erfindung wird vorgeschlagen, dass die Drehlagereinheit zumindest ein Lagermittel aufweist, das am Wischarmadapter angeordnet ist. Dadurch kann eine platzsparende und stabile Drehlagerung des Wischarmadapters und des Wischblattadapters erreicht werden. Unter einem "Lagermittel" soll in diesem Zusammenhang insbesondere ein Bauteil verstanden werden, das eine Lagerfläche zur Kopplung und/oder Kontaktierung eines zu lagernden Bauteils bereitstellt. In einer zusätzlichen Ausgestaltung wird vorgeschlagen, dass das zumindest eine Lagermittel einstückig mit einem Grundkörper des Wischarmadapters ausgebildet ist. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Eine besonders stabile Ausführung der Drehlagereinheit kann erreicht werden, wenn die Drehlagereinheit zumindest eine Lagerausnehmung aufweist, die am Wischblattadapter angeordnet ist. Unter einer "Lagerausnehmung" soll in diesem Zusammenhang insbesondere eine Ausnehmung verstanden werden, die mit dem Lagermittel in ihrer Form korrespondiert und/oder dazu vorgesehen ist, das Lagermittel in einem montierten Zustand aufzunehmen.

Eine besonders stabile Ausführung der Drehlagereinheit kann erreicht werden, wenn die zumindest eine Lagerausnehmung zumindest teilweise in einer Seitenwandung und zumindest teilweise innerhalb eines Grundkörpers des Wischblattadapters angeordnet ist.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung einer erfindungsgemäßen Wischblattadaptervorrichtung,
- Fig. 2: eine perspektivische Ansicht der Wischblattadaptervorrichtung nach Figur 1 in einem ersten Montageschritt,
- Fig. 3: eine perspektivische Ansicht der Wischblattadaptervorrichtung nach Figur 1 in einem weiteren Montageschritt,
- Fig. 4: eine perspektivische Ansicht der Wischblattadaptervorrichtung nach Figur 1 in einem montierten Zustand und
- Fig. 5: eine Schnittdarstellung entlang der Schnittlinie V - V aus Figur 4.

### Beschreibung des Ausführungsbeispiels

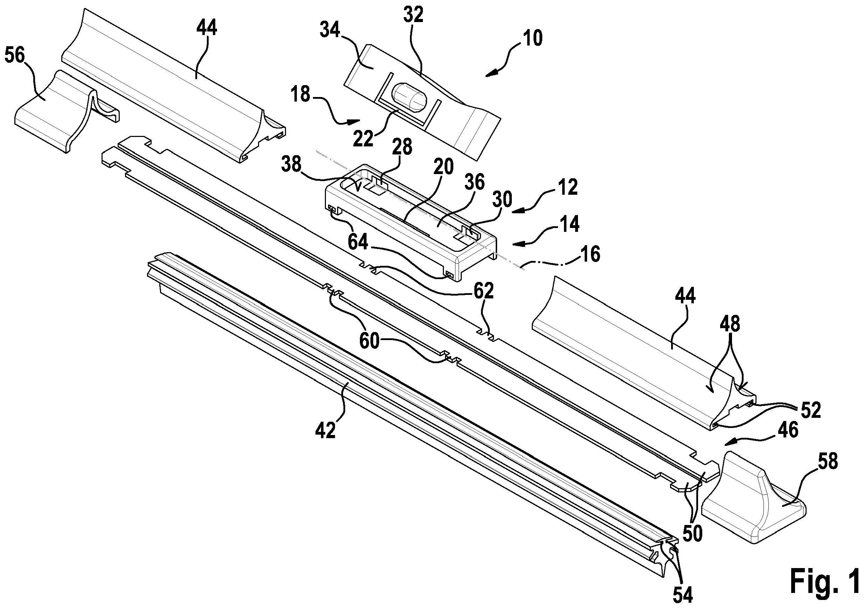

Figur 1 zeigt eine Explosionsdarstellung einer erfindungsgemäßen Wischblattadaptervorrichtung mit einem Wischarmadapter 10 und einem Wischblattadapter 12. Der Wischarmadapter 10 ist vom Wischblattadapter 12 lösbar und somit austauschbar ausgebildet. Der Wischarmadapter 10 weist eine Schnittstelle zu einem Wischarm (nicht gezeigt) auf. Je nach Ausführungsform des Wischarms muss der Wischarmadapter 10 ausgetauscht werden. Ausführungsformen der besagten Schnittstelle des Wischarmadapters 10 sind dem Fachmann allgemein bekannt und aus Gründen der Übersichtlichkeit nicht dargestellt. Die Wischblattadaptervorrichtung umfasst ferner eine Rasteinheit 18 zur Verrastung des Wischarmadapters 10 mit dem Wischblattadapter 12. Der Wischarmadapter 10 weist einen Grundkörper 32 auf, der an einer Seitenwandung 34 ein Rastmittel 22 der Rasteinheit 18 beinhaltet. Das Rastmittel 22 ist einstückig mit dem Grundkörper 32 ausgebildet. Das Rastmittel 22 lässt sich um eine Längsachse 16 um maximal fünf Millimeter auslenken.

Der Wischblattadapter 12 weist einen Grundkörper 36 auf. Der Grundkörper 36 umfasst eine ebene Auflagefläche 38. Ferner ist der Grundkörper 36 von einem Kunststoff-Spritzgussteil gebildet. Es ist in diesem Zusammenhang auch denkbar, den Grundkörper 36 aus einem Metallteil zu bilden, wie insbesondere aus einem Metallblech.

Die Längsachse 16 ist parallel zur Auflagefläche 38 des Wischblattadapters 12 angeordnet. Die Auflagefläche 38 dient bei einem Montagevorgang als Anlage für den Wischarmadapter 10. Der Wischarmadapter 10 wird bei einem Montagevorgang auf die Auflagefläche 38 aufgesetzt. Zudem ist die Längsachse 16 senkrecht zu einer Hauptanpresskraft 40 des Wischarmadapters 10 angeordnet. Die Hauptanpresskraft 40 wird durch ein Drehmoment des Wischarms erzeugt und drückt den Wischblattadapter 12 und ein mit dem Wischblattadapter 12 verbundenes gelenkfreies Wischblatt 42 in Richtung einer zu wischenden Kraftfahrzeugscheibe (nicht dargestellt).

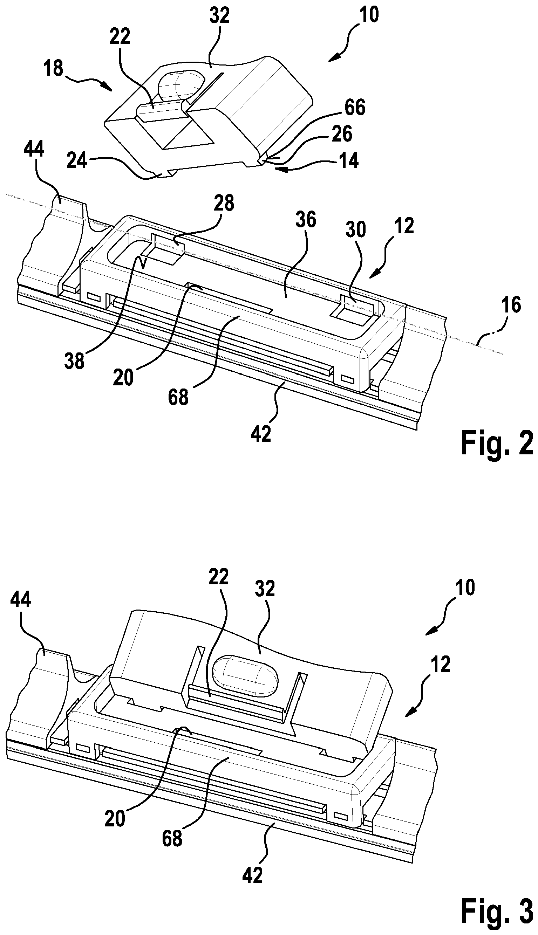

An der Wischblattadaptervorrichtung sind ein Windabweiserelement 44, ein Trägerelement 46 und das Wischblatt 42 angeordnet. Das Windabweiserelement 44 weist zwei symmetrisch ausgebildete, konkave Windabweiserflächen 48 auf, die in einem Betriebszustand auftretenden Fahrtwind abweisen und dabei die Hauptanpresskraft 40 erhöhen. Zudem ist das Windabweiserelement 44 zweigeteilt, also von zwei getrennten Bauteilen gebildet. Das Trägerelement 46 umfasst zwei Federschienen 50. Es ist in diesem Zusammenhang jedoch auch denkbar, eine einteilige Federschiene als Trägerelement einzusetzen. Das Trägerelement 46 wird bei einer Montage in eine Längsführungsschiene 52 des Windabweiserelements 44 eingeschoben. Das Wischblatt 42 wird dabei von den Federschienen 50 beidseitig gehalten. Dazu weist das Wischblatt 42 auf jeder Seite eine Aufnahmenut 54 für das Trägerelement 46 auf. Zwei Abschlusskappen 56, 58 schließen das Trägerelement 46 jeweils an einem Ende, parallel zur Längsachse 16 betrachtet, ab und vermeiden ein Lösen der Federschienen 50 aus der Aufnahmenut 54. Das Wischblatt 42 ist somit in einem montierten Zustand über das Trägerelement 46 mit dem Windabweiserelement 44 verbunden (Figur 2).

Das Trägerelement 46 weist vier Befestigungsnasen 60, 62 auf. Jeweils zwei Befestigungsnasen 60 weisen in eine Richtung, die entgegengesetzt zu einer Richtung der anderen beiden Befestigungsnasen 62 verläuft. Der Grundkörper 36 des Wischblattadapters 12 weist vier Befestigungsausnehmungen 64 auf, die mit den Befestigungsnasen 60, 62 in ihrer Form korrespondieren. Für eine Montage des Wischblattadapters 12 mit dem Trägerelement 46 werden die Befestigungsnasen 60, 62 in die Befestigungsausnehmungen 64 eingeführt. Es sind ferner viele weitere, dem Fachmann als sinnvoll erscheinende Befestigungsmethoden zur Befestigung des Trägerelements 46 mit dem Wischblattadapter 12 denkbar, wie insbesondere ein Einhängen eines Trägerelements in eine Führungsschiene des Wischblattadapters. Ferner ist ein Umschließen des Grundkörpers von einem Trägerelement denkbar. Des Weiteren ist es auch denkbar, das Trägerelement mit dem Grundkörper zu verkleben, zu verschrauben und/oder zu vernieten. Ist der Grundkörper des Wischblattadapters von einem Metallteil gebildet, kann eine Verbindung eines Trägerelements auch durch eine Schweiß- oder Lötverbindung erfolgen.

Figur 2 zeigt eine perspektivische Darstellung der Wischblattadaptervorrichtung vor einem Montagevorgang. Das Windabweiserelement 44, das Trägerelement 46 und das Wischblatt 42 sind mit dem Wischblattadapter 12 unverlierbar verbunden. Die Wischblattadaptervorrichtung weist eine Drehlagereinheit 14 auf. Die Drehlagereinheit 14 ist dazu vorgesehen, den Wischarmadapter 10 und den Wischblattadapter 12 bei einem Montagevorgang relativ zueinander um die Längsachse 16 drehbar zu lagern. Dazu umfasst die Drehlagereinheit 14 zwei Lagermittel 24, 26.

Die Lagermittel 24, 26 sind mit dem Grundkörper 32 des Wischarmadapters 10 einstückig ausgebildet. Es ist in diesem Zusammenhang jedoch auch denkbar, die Lagermittel 24, 26 durch einen Form- und/oder Kraftschluss am Grundkörper 32 zu befestigen, wie insbesondere durch eine Verschraubung und/oder Vernietung. Die Lagermittel 24, 26 sind quaderförmig ausgebildet. Die Lagermittel 24, 26 stellen eine Lagerfläche 66 zur Kontaktierung des Wischblattadapters 12 bereit. Im Grundkörper 36 und in einer Seitenwandung 68 des Wischblattadapters 12 sind zwei Lagerausnehmungen 28, 30 angeordnet. Die Lagerausnehmungen 28, 30 korrespondieren mit den Lagermitteln 24, 26 in ihren geometrischen Formen. Bei einem Einsetzen der Lagermittel 24, 26 in die Lagerausnehmungen 28, 30 kontaktiert die Lagerfläche 66 den Grundkörper 36 des Wischblattadapters 12 innerhalb der Lagerausnehmungen 28, 30.

Die Rasteinheit 18 weist zusätzlich zum Rastmittel 22 eine Rastausnehmung 20 auf, die in der Seitenwandung 68 und im Grundkörper 36 des Wischblattadapters 12 angeordnet ist. Die Seitenwandung 68 ist einstückig mit dem Grundkörper 36 ausgebildet und bildet einen Seitenanschlag für den Wischarmadapter 10 in einem montierten Zustand. Die Seitenwandung 68 des Wischblattadapters 12 erstreckt sich, von der Auflagefläche 38 des Grundkörpers 36 ausgehend, senkrecht zur Auflagefläche 38.

In Figur 3 ist die Wischblattadaptervorrichtung in einem ersten Montageschritt gezeigt. Der Wischarmadapter 10 ist dabei auf den Wischblattadapter 12 schräg aufgesetzt. Die Lagermittel 24, 26 sind in die Lagerausnehmungen 28, 30 eingesetzt und bilden mit diesen einen Formschluss. Die Seitenwandung 68 umschließt den Wischarmadapter 10 teilweise in eine Richtung parallel zur Längsachse 16. Die in die Lagerausnehmungen 28, 30 eingesetzten Lagermittel 24, 26 erlauben eine Drehbewegung des Wischarmadapters 10 relativ zum Wischblattadapter 12 um die Längsachse 16.

Bei einer Drehung des Wischarmadapters 10 relativ zum Wischblattadapter 12 um die Längsachse 16 greifen die Lagermittel 24, 26 vollständig in die Lagerausnehmungen 28, 30 ein. Ein Lösen des Wischarmadapters 10 vom Wischblattadapter 12 wird dadurch vermieden. Die Seitenwandung 68 vermeidet somit eine Bewegung des Wischarmadapters 10 relativ zum Wischblattadapter 12 parallel zur Längsachse 16. Das Rastmittel 22 wird beim Montagevorgang um die Längsachse 16 ausgelenkt. Dabei wird das Rastmittel 22 in einem Endbereich von der Seitenwandung 68 in Richtung der Lagerausnehmungen 28, 30 bewegt.

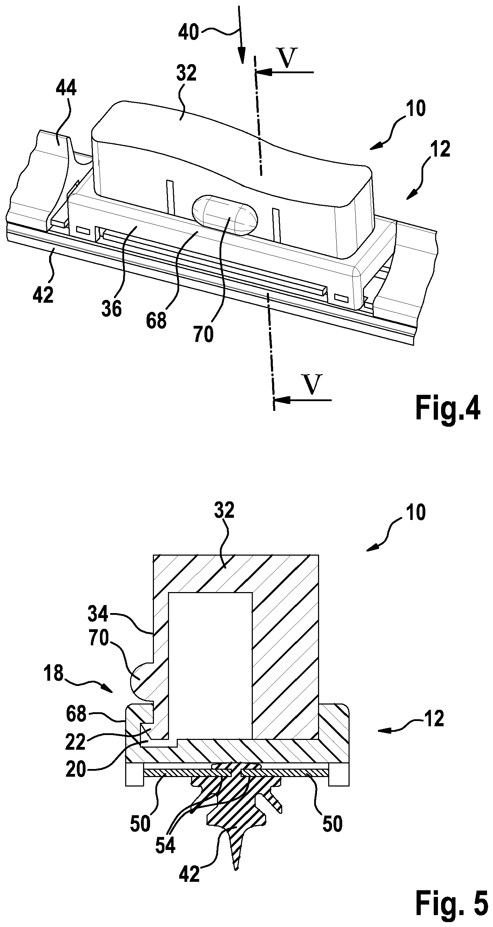

Figur 4 und 5 zeigen die Wischblattadaptervorrichtung in einem montierten Zustand. Das Rastmittel 22 ist formschlüssig innerhalb der Rastausnehmung 20 angeordnet. Die Rasteinheit 18 bildet eine Rastverbindung zwischen dem Wischarmadapter 10 und dem Wischblattadapter 12. Eine Bewegung des Wischarmadapters 10 relativ zum Wischblattadapter 12 senkrecht zur Auflagefläche 38 ist im montierten Zustand durch das Rastmittel 22 und durch die Lagermittel 24, 26 vermieden.

Das Rastmittel 22 und die Lagermittel 24, 26 leiten auftretende Betriebskräfte, die senkrecht zur Längsachse 16 verlaufen, im montierten Zustand direkt vom Wischarmadapter 10 an den Wischblattadapter 12 weiter. Betriebskräfte, die parallel zur Längsachse 16 auftreten, werden von der Seitenwandung 68 an den Grundkörper 32 des Wischarmadapters 10 weitergeleitet.

Ein Lösen der Rastverbindung ist durch ein Auslenken des Rastmittels 22 möglich. Dazu weist das Rastmittel 22 ein Bedienelement 70 auf, das dazu vorgesehen ist, eine Bedienfläche für einen Bediener bereitzustellen. Das Bedienelement 70 umfasst einen halbrunden zylinderförmigen Körper, der einstückig mit dem Grundkörper 32 ausgebildet ist. Wird ein Druck auf das Bedienelement 70 ausgeübt, wird das Rastmittel 22 entgegen seiner inneren Spannkraft aus der korrespondierenden Rastausnehmung 20 bewegt. Anschließend wird der Wischarmadapter 10 relativ zum Wischblattadapter 12 um die Längsachse 16 gedreht. Dadurch wird der Grundkörper 32 an einer Seite von der Seitenwandung 68 freigegeben, und die Lagermittel 24, 26 können aus den Lagerausnehmungen 28, 30 genommen werden.

## Patentansprüche

1. Wischblattadaptervorrichtung mit einem Wischarmadapter (10) und einem Wischblattadapter (12), sowie einer Drehlagereinheit (14), die dazu vorgesehen ist, den Wischarmadapter (10) und den Wischblattadapter (12) bei einem Montagevorgang relativ zueinander um eine Längsachse (16) des Wischblattadapters (12) drehbar zu lagern und einer Rasteinheit (18), die dazu vorgesehen ist, in einem montierten Zustand eine Rastverbindung zwischen dem Wischarmadapter (10) und dem Wischblattadapter (12) zu bilden, wobei der Wischarmadapter (10) vom Wischblattadapter (12) austauschbar ausgebildet ist und eine Schnittstelle zu einem Wischarm aufweist, so daß je nach Ausführungsform des Wischarms der Wischarmadapter (10) austauschbar ist, **dadurch gekennzeichnet, dass** die Rasteinheit (18) zumindest eine Rastausnehmung (20) aufweist, die am Wischblattadapter (12) angeordnet ist und die zumindest eine Rastausnehmung (20) zumindest teilweise in einer Seitenwandung (68) und zumindest teilweise innerhalb eines Grundkörpers (36) des Wischblattadapters (12) angeordnet ist.

2. Wischblattadaptervorrichtung nach Anspruch 1, **dadurch gekennzeichnet, dass** die Rasteinheit (18) zumindest ein Rastmittel (22) aufweist, das am Wischarmadapter (10) angeordnet ist.

3. Wischblattadaptervorrichtung nach Anspruch 1, **dadurch gekennzeichnet, dass** das zumindest eine Rastmittel (22) dazu vorgesehen ist, bei einem Montagevorgang um die Längsachse (16) ausgelenkt zu werden.

4. Wischblattadaptervorrichtung nach einem der vorhergehenden Ansprüche, **dadurch gekennzeichnet, dass** die Drehlagereinheit (14) zumindest ein Lagermittel (24, 26) aufweist, das am Wischarmadapter (10) angeordnet ist.

5. Wischblattadaptervorrichtung nach einem der vorhergehenden Ansprüche, **dadurch gekennzeichnet, dass** die Drehlagereinheit (14) zumindest eine Lagerausnehmung (28, 30) aufweist, die am Wischblattadapter (12) angeordnet ist.

## Claims

1. Wiper blade adapter device with a wiper arm adapter (10) and a wiper blade adapter (12), and with a rotary bearing unit (14) which is provided to mount the wiper arm adapter (10) and the wiper blade adapter (12) so as to be rotatable relative to each other about a longitudinal axis (16) of the wiper blade adapter (12) during an assembly operation, and with a latching unit (18) which is provided to form a latching connection between the wiper arm adapter (10) and the wiper blade adapter (12) in an assembled state, wherein the wiper arm adapter (10) is designed to be exchangeable from the wiper blade adapter (12) and has an intersection with a wiper arm such that the wiper arm adapter (10) is exchangeable depending on the embodiment of the wiper arm, **characterized in that** the latching unit (18) has at least one latching recess (20) which is arranged on the wiper blade adapter (12), and the at least one latching recess (20) is at least partially arranged in a side wall (68) and at least partially arranged within a basic body (36) of the wiper blade adapter (12).

2. Wiper blade adapter device according to Claim 1, **characterized in that** the latching unit (18) has at least one latching means (22) which is arranged on the wiper arm adapter (10).

3. Wiper blade adapter device according to Claim 1, **characterized in that** the at least one latching means (22) is provided in order to be deflected about the vertical axis (16) during an assembly operation.

4. Wiper blade adapter device according to one of the preceding claims, **characterized in that** the rotary bearing unit (14) has at least one bearing means (24, 26) which is arranged on the wiper arm adapter (10) .

5. Wiper blade adapter device according to one of the preceding claims, **characterized in that** the rotary bearing unit (14) has at least one bearing recess (28, 30) which is arranged on the wiper blade adapter (12).

## Revendications

1. Dispositif adaptateur de balai d'essuie-glace comprenant un adaptateur de bras d'essuie-glace (10) et un adaptateur de balai d'essuie-glace (12) ainsi qu'une unité de palier pivotant (14) qui est prévue pour supporter l'adaptateur de bras d'essuie-glace (10) et l'adaptateur de balai d'essuie-glace (12) lors d'une opération de montage l'un par rapport à l'autre de manière pivotante autour d'un axe longitudinal (16) de l'adaptateur de balai d'essuie-glace (12), et une unité d'encliquetage (18) qui est prévue pour former dans l'état monté une connexion par encliquetage entre l'adaptateur de bras d'essuie-glace (10) et l'adaptateur de balai d'essuie-glace (12), l'adaptateur de bras d'essuie-glace (10) étant réalisé de manière à pouvoir être remplacé depuis l'adaptateur de balai d'essuie-glace (12) et présentant une interface avec un bras d'essuie-glace de telle sorte qu'en fonction de la forme de réalisation du bras d'essuie-glace, l'adaptateur de bras d'essuie-glace (10) puisse être remplacé, **caractérisé en ce que** l'unité d'encliquetage (18) présente au moins un évidement d'encliquetage (20) qui est disposé au niveau de l'adaptateur de balai d'essuie-glace (12) et l'au moins un évidement d'encliquetage (20) est disposé au moins en partie dans une paroi latérale (68) et au moins en partie à l'intérieur d'un corps de base (36) de l'adaptateur de balai d'essuie-glace (12).

2. Dispositif adaptateur de balai d'essuie-glace selon la revendication 1, **caractérisé en ce que** l'unité d'encliquetage (18) présente au moins un moyen d'encliquetage (22) qui est disposé au niveau de l'adaptateur de bras d'essuie-glace (10) .

3. Dispositif adaptateur de balai d'essuie-glace selon la revendication 1, **caractérisé en ce que** l'au moins un moyen d'encliquetage (22) est prévu pour être dévié autour de l'axe longitudinal (16) lors d'une opération de montage.

4. Dispositif adaptateur de balai d'essuie-glace selon l'une quelconque des revendications précédentes, **caractérisé en ce que** l'unité de palier pivotant (14) présente au moins un moyen de palier (24, 26) qui est disposé au niveau de l'adaptateur de bras d'essuie-glace (10).

5. Dispositif adaptateur de balai d'essuie-glace selon l'une quelconque des revendications précédentes, **caractérisé en ce que** l'unité de palier pivotant (14) présente au moins un évidement de palier (28, 30) qui est disposé au niveau de l'adaptateur de balai d'essuie-glace (12) .
